Europäisches Patentamt

European Patent Office

Office européen des brevets

(11) Numéro de publication: **0 149 949**
**A2**

(12) # DEMANDE DE BREVET EUROPEEN

(21) Numéro de dépôt: **84402744.1**

(22) Date de dépôt: **27.12.84**

(51) Int. Cl.⁴: **H 04 N 5/217**

(30) Priorité: **20.01.84 FR 8400888**

(43) Date de publication de la demande:
**31.07.85 Bulletin 85/31**

(84) Etats contractants désignés:
**BE DE GB NL**

(71) Demandeur: **THOMSON-CSF**
**173, Boulevard Haussmann**
**F-75379 Paris Cedex 08(FR)**

(72) Inventeur: **Mourier, Christian**
**THOMSON-CSF SCPI 173, bld Haussmann**
**F-75379 Paris Cedex 08(FR)**

(74) Mandataire: **Courtellemont, Alain et al,**
**THOMSON-CSF SCPI 173, Bld Haussmann**
**F-75379 Paris Cedex 08(FR)**

(54) Dispositif de correction de diffusion optique pour tube de prise de vues de télévision, et caméra de télévision comportant un tel dispositif.

(57) Les objectifs des caméras de télévision couvrent un champ supérieur au champ de l'image utile, c'est-à-dire de l'image destinée à être télévisée; or des défauts apparaissent qui proviennent d'un phénomène de diffusion, dans l'image utile, de lumières provenant de l'image non destinée à être télévisée, c'est-à-dire du pourtour de l'image utile.

Le dispositif est destiné à permettre la correction de la diffusion de pourtour. Il comporte pour cela des moyens d'analyse et de traitement (20, 21, 22, C, Rh, 12) pour analyser une bande entourant, sur la cible, l'image destinée à être télévisée, et pour fournir un signal de correction de diffusion représentatif d'une valeur moyenne des signaux d'analyse de la bande fermée.

Application aux prises de vues de télévision.

./...

Fig.3

1

Dispositif de correction de diffusion optique pour tube de prise
de vues de télévision et caméra de télévision comportant un tel dispositif.

La présente invention se rapporte à un dispositif de correction de
diffusion optique pour tube de prise de vues de télévision et plus
particulièrement à un dispositif de correction des effets de diffusion du
pourtour.

Les objectifs des caméras de télévision couvrant un champ
supérieur au champ de l'image utile, c'est-à-dire de l'image destinée à
être télévisée, il est connu que des défauts apparaissent qui proviennent
d'un phénomène de diffusion des lumières de la partie de l'image fournie
par l'objectif de la caméra et qui entoure l'image utile ; c'est la diffusion
du pourtour dans l'image utile, aussi appelée diffusion de pourtour. Or les
dispositifs de correction qui mesurent en permanence le contenu moyen de
l'image utile et appliquent une fraction de cette valeur en correction dans
la chaîne de transmission du signal vidéo, ne sont pas en mesure de
détecter et donc de corriger les défauts de diffusion du pourtour dans
l'image utile.

Il est connu, pour essayer de remédier à ces défauts dus à la
diffusion du pourtour dans l'image utile, de disposer, devant la cible du tube
analyseur un cache percé d'une fenêtre. La partie inutile de l'image
fournie par l'objectif de la caméra à la cible du tube analyseur, peut donc,
théoriquement, être éliminée. Mais, en pratique, du fait de la constitution
du tube analyseur, il n'est pas possible de disposer le cache juste contre la
cible car devant la cible, sur la fenêtre d'entrée du tube, est placée une
pastille de verre de quelques millimètres d'épaisseur, pour éviter les halos
qu'entraîneraient d'éventuelles réflexions parasites dans la fenêtre d'entrée du tube ; l'écart, dû à cette pastille, entre le cache et le plan focal
de l'objectif, c'est-à-dire le plan de la cible, oblige à agrandir la fenêtre
du cache afin de ne pas produire d'ombre sur les bords de l'image utile ;
l'efficacité du cache est donc limitée puisque la cible reçoit une partie de l'image inutile.

Le but de l'invention est d'éviter ou pour le moins de réduire très sensiblement les inconvénients indiqués ci-avant.

Ceci est obtenu en tenant compte, dans le signal élaboré par le dispositif électronique de correction de diffusion optique, de la partie de l'image fournie par l'objectif de la caméra de télévision à la cible du tube analyseur et qui entoure l'image utile.

Selon l'invention un dispositif de correction de diffusion optique pour tube de prise de vues de caméra de télévision, comportant un circuit additionneur pour recevoir les signaux vidéo produits par la cible du tube et des signaux de correction de diffusion, est caractérisé en ce qu'il comporte des moyens de correction de diffusion de pourtour pour analyser une bande fermée de l'image fournie par l'objectif de la caméra et qui entoure l'image utile, c'est-à-dire l'image finale qui sera télévisée, et pour fournir au circuit additionneur un signal de correction de diffusion représentatif d'une valeur moyenne des signaux d'analyse de la bande fermée.

La présente invention sera mieux comprise et d'autres caractéristiques apparaîtront à l'aide de la description ci-après et des figures s'y rapportant qui représentent :

- la figure 1, un premier exemple de réalisation d'un dispositif selon l'invention,
- les figures 2 et 3, deux parties d'un second exemple de réalisation d'un dispositif selon l'invention.

Sur les figures les éléments correspondants sont désignés par les mêmes repères.

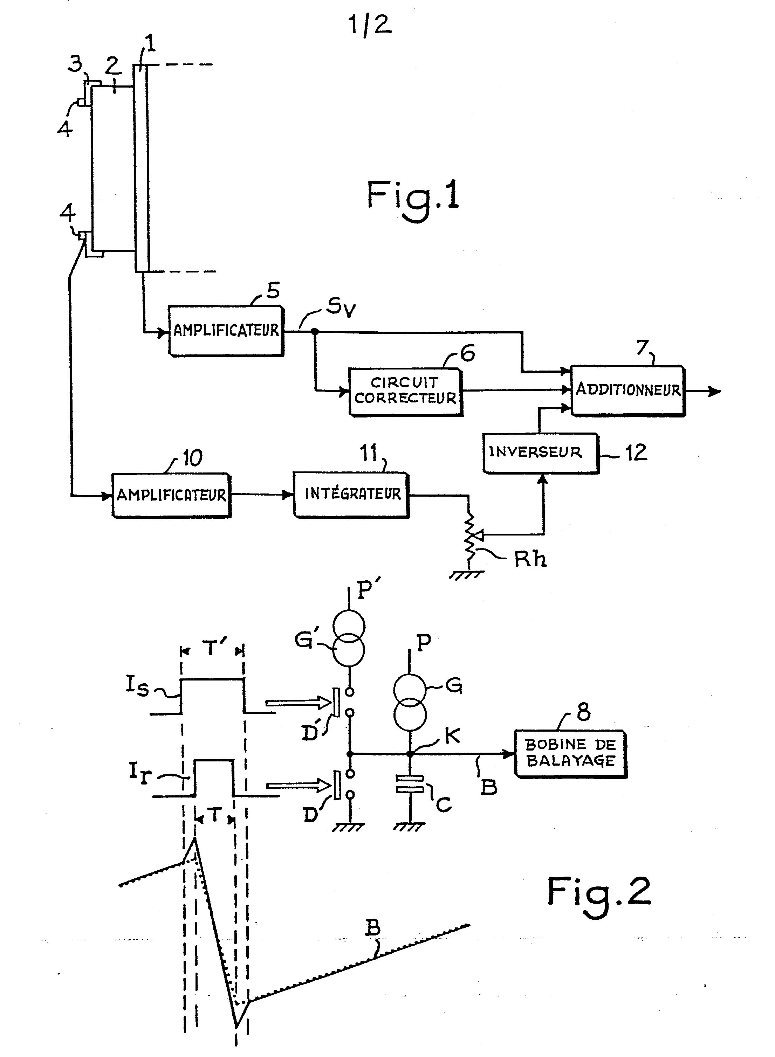

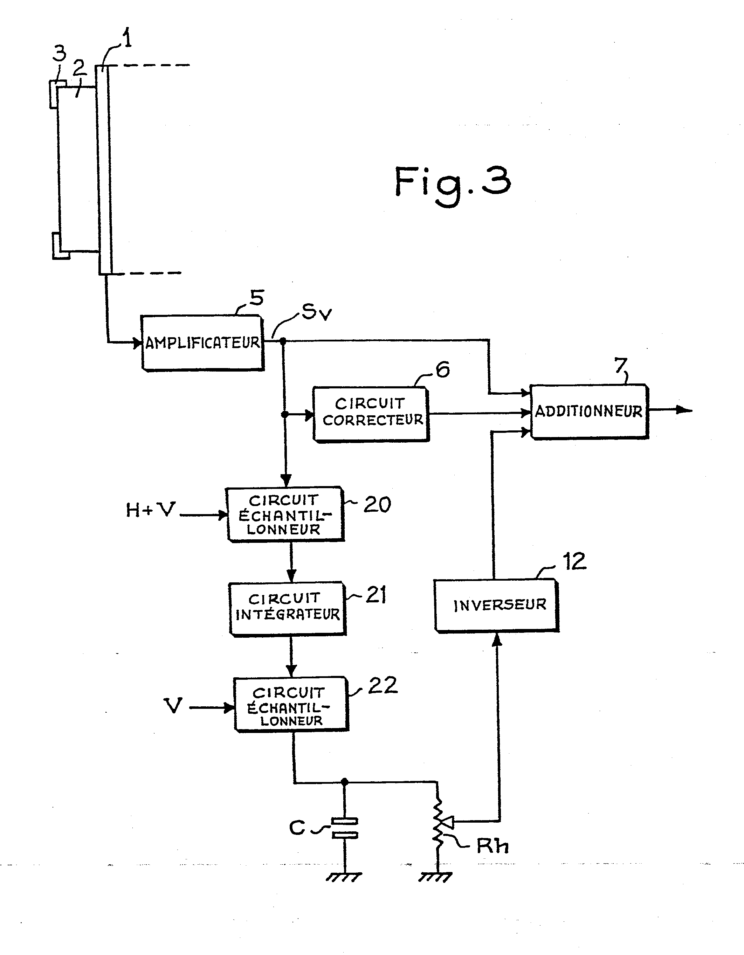

Sur la figure 1 est représenté schématiquement l'avant, 1, 2, d'un tube analyseur moderne à cible photoconductrice, 1, au protoxyde de plomb, recouverte d'une pastille de verre anti-halo, 2. Ce tube est recouvert d'un cache, 3, percé d'une fenêtre rectangulaire. Le tube de la figure 1, comme celui dont il sera question lors de la description de la figure 3, est un tube de un pouce (25,4 mm) de diamètre, avec une cible d'un diamètre de 20,6 millimètres et est recouvert d'un cache dont la fenêtre mesure 11 par 14 millimètres.

Tout autour du bord de la fenêtre du cache 3 de la figure 1 est disposé un cadre, 4, formé d'une barrette de capteurs du type éléments à couplage de charges (Charge Coupled Device dans la littérature anglo-saxonne), qui possède son circuit de balayage propre, indépendant de celui du tube analyseur. Ce cadre, là où il est disposé, est sensible aux lumières reçues par une bande fermée entourant l'image utile ; par image utile on entend, ici et dans la suite de la description, la partie de l'image fournie par l'objectif de la caméra, qui sera télévisée. Un amplificateur 10 reçoit les signaux du cadre 4 et, après amplification, les applique à l'entrée d'un intégrateur 11 qui en donne une valeur moyenne. Un potentiomètre, Rh, reçoit le signal de sortie de l'intégrateur 11 et en applique, à travers un inverseur 12, une fraction ajustable sur la troisième entrée d'un additionneur 7. L'additionneur 7, à la différence près qu'il comporte trois entrées et non pas deux, est l'additionneur d'un dispositif classique de correction de diffusion comportant, en amont de l'additionneur, un amplificateur 5 et un circuit correcteur classique, 6 ; l'amplificateur 5 est relié à la cible, 1, du tube pour fournir un signal vidéo amplifié, Sv, à la première entrée de l'additionneur et à l'entrée du circuit correcteur, 6, dont la sortie est reliée à la deuxième entrée de l'additionneur 7. Le circuit correcteur, 6, mesure la valeur moyenne du contenu de chaque trame de l'image et applique une fraction de cette valeur, en soustraction du signal vidéo Sv grâce à un inverseur de sortie, sur la deuxième entrée de l'additionneur.

La correction des effets de diffusion dus au pourtour de l'image utile et qui est effectuée par les éléments 4, 10, 11, Rh, 12 de la figure 1, a été expérimentée en laboratoire et a donné des résultats satisfaisants ; malheureusement, actuellement cette solution est coûteuse, du fait de la barrette de capteurs, 4, et une autre solution a été expérimentée qui conduit à une même qualité de correction tout en étant nettement moins onéreuse ; cette autre solution est décrite à l'aide des figures 2 et 3.

Dans le dispositif de correction décrit à l'aide des figures 2 et 3 le signal de correction est obtenu en utilisant la cible 1 du tube comme moyen de captage de signaux qui, après traitement, vont servir à effectuer la correction de diffusion du pourtour. Pour cela il est prévu de modifier le balayage du tube afin d'étendre l'analyse du tube à la zone d'ombre due au cache ou, dans le cas où il n'est pas fait usage d'un cache, à une bande fermée entourant l'image utile.

La figure 2 montre comment est modifié le balayage du tube. Un générateur de courant, G, est branché entre un point de potentiel P et une borne K ; un condensateur C et un interrupteur électronique D, schématisé par un simple interrupteur mécanique, sont branchés entre la borne K et la masse. Les éléments G, C, D, tels qu'ils sont montés, constituent un générateur de signaux en dents de scie classique. L'interrupteur D est commandé par des impulsions Ir de durée T et le générateur de signaux constitué par les éléments G, C, D délivre à une bobine de balayage 8, un signal de balayage B, représenté en pointillés sur la figure 2 ; dans le cas du générateur de dents de scie ligne, les impulsions Ir sont les impulsions de retour de ligne (d'une durée de 9 μs dans l'exemple décrit) et, dans le cas du générateur de dents de scie trame, les impulsions de retour de trame (d'une durée de 400 μs dans l'exemple décrit). Le générateur de dents de scie de la figure 2 se distingue d'un générateur classique par l'adjonction, entre la borne K et un point à un potentiel P' supérieur à P, d'un second interrupteur électronique D' et d'un second générateur de courant G' montés en série. L'interrupteur D' est commandé par des impulsions Is d'une durée T' supérieure à la durée T de retour ligne (ou trame) et au plus égale à la durée de la suppression finale (12 μs pour la suppression ligne et 1,2 ms pour la suppression trame) ; dans l'exemple décrit les impulsions Is à fréquence de trame ont une durée de 1 ms et les impulsions Is à fréquence de ligne une durée de 11 μs. Le signal de sortie, B, du générateur de balayage constitué des éléments G, G', C, D, D' à l'allure du signal représenté en trait continu sur la figure 2.

La figure 3 montre un tube avec sa cible, 1, sa pastille de verre anti-halo, 2, et son cache 3. Ce tube, dont le balayage est commandé par un générateur selon la figure 2, a sa cible qui est connectée, comme pour le tube de la figure 1, à un amplificateur 5 dont la sortie est reliée directement à la première entrée d'un additionneur 7 et, à travers un circuit correcteur classique, 6, à la deuxième entrée de l'additionneur 7.

Par rapport à un dispositif de correction de diffusion classique le dispositif selon la figure 3, outre qu'il utilise un additionneur, 7, à trois et non pas à deux entrées, comporte, entre la sortie de l'amplificateur 5 et la troisième entrée de l'additionneur 7, un ensemble de circuits pour la correction des effets de diffusion dus au pourtour de l'image utile. Cet ensemble supplémentaire comporte : un circuit échantillonneur 20 dont le signal d'entrée est constitué par le signal vidéo amplifié, Sv, que délivre l'amplificateur 5, un circuit intégrateur 21 dont l'entrée est branchée sur la sortie du circuit échantillonneur 20, un circuit échantillonneur 22 dont l'entrée de signal est branchée sur la sortie du circuit intégrateur 21, un condensateur C branché entre la sortie du circuit échantillonneur 22 et la masse, un potentiomètre Rh dont les extrémités sont branchées respectivement sur la sortie du circuit échantillonneur 22 et à la masse, et un inverseur 12 dont l'entrée est reliée au curseur du potentiomètre Rh et dont la sortie est reliée à la troisième entrée de l'additionneur 7.

Le circuit échantillonneur 20 de la figure 3 est passant pendant la durée des impulsions d'échantillonnage H + V appliquées sur son entrée de commande ; ces impulsions H + V sont constituées par l'ensemble des impulsions Is dont il a été question à l'occasion de la description de la figure 2, c'est-à-dire aussi bien les impulsions Is à fréquence de ligne du générateur de balayage ligne que les impulsions Is à fréquence de trame du générateur de balayage trame ; le circuit échantillonneur 20 permet ainsi de recueillir les signaux vidéo correspondant aux lumières périphériques de l'image utile dans l'image fournie à la cible 1 par l'objectif de la caméra.

Le circuit intégrateur 21 de la figure 3 fournit la valeur moyenne du signal échantillonné par le circuit échantillonneur 20. Pour éviter les fluctuations, au cours d'une trame d'analyse, du signal de correction de la diffusion de pourtour, cette valeur moyenne est échantillonnée, dans le circuit échantillonneur 22, à la fréquence de trame grâce au signal V constitué par les impulsions Is du générateur de balayage trame. Le signal obtenu est maintenu en mémoire, pendant la durée d'une trame, dans le condensateur C et une fraction ajustable de la valeur mise en mémoire est, après inversion dans l'inverseur 12, additionnée au signal vidéo Sv et au signal de correction principal (sortie du circuit correcteur 6), durant la trame suivante.

La correction de la diffusion de pourtour effectuée selon les schémas des figures 2 et 3 et la description s'y rapportant est quasiment parfaite. Des corrections moins parfaites mais plus faciles à mettre en oeuvre sur des matériels existants, peuvent également être conçues dans le cadre de l'invention. Par exemple, sans changer l'allure des balayages et les temps de blocage des faisceaux, c'est-à-dire en particulier avec des circuits de balayage classiques, une zone de surface relativement faible est analysée en dehors de l'image utile ; cette zone correspond aux intervalles de temps situés entre le blocage des faisceaux ($9\,\mu$s entre lignes et 400 ms entre trames) et la suppression finale ($12\,\mu$s entre lignes et 1,2 ms entre trames) ; la correction peut donc se faire en échantillonnant, comme dans le cas de la figure 3, les signaux relatifs à cette zone.

Il est également à remarquer que la correction de diffusion de pourtour peut être effectuée en supprimant, dans le schéma de la figure 3, les circuits 21 et 22 et en les remplaçant par une liaison directe entre le circuit échantillonneur 20 et le point commun au condensateur C et au potentiomètre Rh ; le signal de sortie du circuit échantillonneur 20 est mis en mémoire dans le condensateur C, sans traitement préalable, il en résulte une légère variation du niveau du noir au cours d'une trame mais les essais ont montré que la qualité de l'image est nettement améliorée par rapport aux résultats obtenus sans correction de la diffusion de pourtour.

Il est par ailleurs à noter qu'un dispositif de correction de diffusion de pourtour selon l'invention, peut dans une caméra de télévision en couleur être appliqué seulement à un tube, généralement le rouge, ou à deux des tubes ou aux trois tubes.

Il est à noter d'autre part que les réalisations dont il a été question ci-avant se rapportaient à des corrections de diffusion de pourtour où un signal unique est élaboré par trame pour la correction des signaux vidéo de la trame suivante ; il serait également possible, mais onéreux, d'élaborer, avec les signaux d'analyse du pourtour de l'image utile, autant de signaux que de lignes d'analyse dans une trame ; il serait également possible de subdiviser la zone d'analyse et d'effectuer ainsi des corrections plus localisées que dans le cas ou un même signal uniforme est appliqué pour la correction de toute une trame, comme dans les exemples décrits.

REVENDICATIONS

1. Dispositif de correction de diffusion optique pour tube de prise de vues de caméra de télévision, comportant un circuit additionneur (7) pour recevoir les signaux vidéo produits par la cible (1) du tube et des signaux de correction de diffusion, caractérisé en ce qu'il comporte des moyens de correction de diffusion de pourtour (4, 10, 11, Rh, 12 - G', D', 20, 21, 22, C, Rh, 12) pour analyser une bande fermée de l'image fournie par l'objectif de la caméra et qui entoure, sur la cible, l'image utile, c'est-à-dire l'image destinée à être télévisée, et pour fournir au circuit additionneur un signal de correction de diffusion représentatif d'une valeur moyenne des signaux d'analyse de la bande fermée.

2. Dispositif de correction selon la revendication 1, pour tube de prise de vues de télévision muni, sur sa face avant, d'un cache, 3, percé d'une fenêtre, caractérisé en ce que les moyens de correction de diffusion de pourtour comportent : un cadre (4) formé d'éléments photosensibles disposés sur le devant du cache, autour de la fenêtre ; un circuit d'amplification (10) pour amplifier les signaux fournis par les éléments photosensibles ; et un circuit d'intégration (11) ayant une entrée couplée au circuit d'amplification et une sortie couplée au circuit additionneur.

3. Dispositif de correction selon la revendication 1, caractérisé en ce que les moyens de correction de diffusion de pourtour comportent : un circuit échantillonneur (20) couplé à la sortie vidéo du tube pour effectuer une sélection des signaux vidéo correspondant à la bande fermée, les signaux de commande d'échantillonnage étant, pour cela, constitués par des impulsions à fréquence de ligne d'une durée supérieure à la durée de retour ligne et au plus égale à la durée de la suppression ligne finale de l'image utile et par des impulsions à fréquence de trame d'une durée supérieure à la durée de retour trame et au plus égale à la durée de la suppression trame finale de l'image utile ; et un circuit de mise en mémoire (C) couplé au circuit échantillonneur (20) et couplé au circuit additionneur (7).

4. Dispositif de correction selon la revendication 3, caractérisé en ce que le circuit échantillonneur (20) est couplé au circuit de mise en mémoire (C) par un circuit intégrateur (21) suivi d'un autre circuit échantillonneur (22) dont les signaux de commande d'échantillonnage sont constitués par des impulsions à fréquence de trame d'une durée au plus égale à la durée de suppression trame finale de l'image utile.

5. Dispositif de correction selon l'une quelconque des revendications 1, 3, 4, caractérisé en ce que les moyens de correction de diffusion de pourtour comportent un circuit complémentaire (G', D') couplé au circuit de balayage classique (G, D, C) du tube afin d'étendre le balayage du tube à toute la bande fermée.

6. Caméra de télévision, caractérisée en ce qu'elle comporte au moins un dispositif de correction selon l'une des revendications précédentes.

## Fig.1

AMPLIFICATEUR 5 $S_V$

CIRCUIT CORRECTEUR 6

ADDITIONNEUR 7

INVERSEUR 12

AMPLIFICATEUR 10

INTÉGRATEUR 11

Rh

## Fig.2

$T'$

$I_s$

$I_r$

$T$

P'

G'

D'

P

G

K

D

C

8

BOBINE DE BALAYAGE

B

B

# Fig.3

AMPLIFICATEUR 5

Sv

CIRCUIT CORRECTEUR 6

ADDITIONNEUR 7

H+V → CIRCUIT ÉCHANTIL-LONNEUR 20

CIRCUIT INTÉGRATEUR 21

V → CIRCUIT ÉCHANTIL-LONNEUR 22

INVERSEUR 12

C

Rh